# EUROPÄISCHE PATENTANMELDUNG

(11) **EP 1 024 117 A1**
(43) Veröffentlichungstag der Anmeldung: **02.08.2000**
(21) Anmeldenummer: 00101503.1
(22) Anmeldetag: 26.01.2000
(51) Int. Cl.: C02F 3/30, C02F 3/12

(54) **Verfahren sowie Vorrichtung zur Behandlung von Abwasser in Klärbecken**

(30) Priorität: 26.01.1999 DE 19903035
(71) Anmelder: Messner, Rudolf, 91325 Adelsdorf (DE)
(72) Erfinder: Messner, Rudolf, 91325 Adelsdorf (DE)
(74) Vertreter: Stippl, Hubert

(57) **Zusammenfassung**

Die Erfindung betrifft ein Verfahren zur Behandlung von Abwasser in Klärbecken zum Zwecke der Abwasserreinigung. Als erster Verfahrensschritt ist mindestens ein Belüftungselement im Bodenbereich des Klärbeckens zum Einblasen von Luft in das Abwasser vorgesehen, um während einer zeitlich begrenzten Nitrifikationsphase Sauerstoff in den Klärprozeß einzutragen und als zweiter Verfahrensschritt ist mindestens eine der Nitrifikationsphase nachfolgende Denitrifikationsphase vorgesehen, während der kein für den Klärprozeß relevanter Sauerstoffeintrag in das Abwasser erfolgt und das Abwasser zur Aufwirbelung der Belebtschlammteilchen während der Denitrifikationsphase durch kurze, von den Belüftungselementen abgegebene Strömungsimpulse erzeugt wird.

## Beschreibung

Die Erfindung betrifft ein Verfahren zur Behandlung von Abwasser in Klärbecken.

Eine bekannte Verfahrensweise sieht vor, Abwasser in Klärbecken, das durch einen biologischen Prozeß gereinigt werden soll, zu belüften. Dabei werden im Bodenbereich des Klärbeckens Belüftungselemente vorgesehen, um während einer zeitlich begrenzten Zeitphase, nämlich einer sogenannten ,,Nitrifikationsphase" Sauerstoff in den Klärprozeß einzutragen. Dies geschieht dadurch, daß die Belüftungselemente mit Druckluft angeblasen werden und - abhängig von ihrer Bauart - im wesentlichen flächig oder lokal mehr oder weniger feine Luftblasen in das Abwasser eingetragen, die dann im Abwasser hochsteigen und sich mit diesem vermischen. Dabei wird der sich in der Luftblase befindliche Sauerstoff an das Abwasser abgegeben. Die im Abwasser vorhandenen Mikroorganismen (Nitrifikantenpopulation) zehren während der verschiedenen Stoffwechselabläufe den im Abwasser gelösten Sauerstoff und führen dabei das Ammonium (NH₄) letztlich in Nitrat (NO₃) über. Gleichzeitig werden in dieser Phase Kohlenstoffverbindungen abgebaut.

Für den Klärprozeß mit einer erweiterten Stickstoffelimination ist es erforderlich, daß sich der vorstehend grob umrissenen Nitrifikationsphase eine sogenannte ,,Denitrifikationsphase" anschließt. Die für diese Phase wichtigen Mikroorganismen (Denitrifikationspopulation) haben die Eigenschaft, bei fehlendem gelösten Sauerstoff sich diesen aus dem Nitrat (NO₃) zu holen, wobei der übrigbleibende elementare Stickstoff (N) gasförmig aus dem Abwasser in die Atmosphäre entweicht. Diese Phase kann in der Einbeckentechnologie durch Abschalten der Belüftungselemente und vollständiger Zehrung des gelösten Sauerstoffs im Abwasser relativ schnell (2 - 5 min) ausgelöst werden.

Während der Denitrifikationsphase in solchen Klärbecken tritt das Problem auf, daß die im Klärwasser schwebenden Belebtschlammteilchen (Biomasse) dazu tendieren, sich im Bereich des Beckenbodens abzusetzen. Falls sie dort abgelagert sind, kann der biologische Klärprozeß (Denitrifikationsphase) nicht mehr voll effektiv ablaufen, weswegen bei Verfahren nach dem Stand der Abwassertechnik während der Denitrifikationsphasen dazu übergegangen worden ist, das Abwasser zu mobilisieren, d.h. zu bewegen, wodurch die Biomasse aufgewirbelt und in einem gewissen Schwebezustand gehalten wird. Dazu sind aufwendige, in die Klärbecken eingebaute Rührwerke, z.B. motorisch angetriebene rotierende Rührarme erforderlich, die das Abwasser in Bewegung setzen.

Nachteilig an solchen Rührwerken kann allerdings sein, daß die Rührarme der Rührwerke die Belebtschlammflocken mechanisch zerschlagen (Scherwirkung) und somit eine Verschlechterung des Absetzverhaltens in der Nachklärphase (Trennung des Klärschlammes vom Abwasser) bewirken.

Außerdem sind die Anschaffung und die Montage mit erheblichen Investitionskosten und der Betrieb mit hohen Energie- und Wartungskosten verbunden.

Der Erfindung liegt die Aufgabe zugrunde, ein Verfahren zur Behandlung von Abwasser mit den Merkmalen des Oberbegriffs des Patentanspruchs derart weiterzubilden, daß es, ohne den Klärprozeß negativ zu beeinflussen, keiner zusätzlichen Einrichtungen, die Kosten verursachen, bedarf.

Diese Aufgabe wird dadurch gelöst, daß die Abwassermobilisierung zur Aufwirbelung der Belebtschlammteilchen während der Denitrifikationsphase durch kurze, von den Belüftungselementen abgegebene Strömungsimpulse erzeugt wird.

Die Erfindung geht im Kern von der Erkenntnis aus, daß es entgegen der bisherigen Fachmeinung nicht schädlich ist, auch während der Denitrifikationsphase mit kurzen Strömungsimpulsen ausschließlich durch die Belüftungselemente den Belebtschlamm in Schwebe zu halten. Wenn hier von Strömungsimpulsen gesprochen wird, so können dies Gasströmungen sein, die gegebenenfalls auch durch sauerstofffreie Gasmedien ersetzt werden können.

Am wirtschaftlichsten ist es natürlich, wenn die Strömungsimpulse in der Denitrifikationsphase Druckluftimpulse aus der Atmosphäre sind (Luftströmungsimpulse), da dieselbe Einrichtung im Dauerbetrieb für die Nitrifikationsphase benötigt wird.

Bei der Bemessung der Luftströmungsimpulse ist es nur erforderlich, daß diese so gelegt und zeitlich auch so begrenzt sind, daß das dadurch in das Abwasser eingetragene Gas die Denitrifikation nicht unterbricht. Dazu ist die Erkenntnis erforderlich, daß - wenn die Mikroorganismen während der Denitrifikationsphase auf die Sauerstoffaufnahme aus dem Nitrat (NO₃) umgeschaltet haben - eine Rückführung dieses Prozesses das Vorhandensein von gelöstem Sauerstoff im Abwasser kontinuierlich über längere Zeit voraussetzt.

Wird hingegen das Abwasser nur durch etwa 10 - 60 s lange Luftströmungsimpulse mobilisiert und dabei auch etwas Sauerstoff eingetragen, so ist dieser Sauerstoffeintrag nicht ausreichend, um die Mikroorganismen zu veranlassen, ihr Sauerstoffaufnahmeverhalten wieder zurückzuschalten. Zur Belebtschlammdurchmischung sind derartige Luftströmungsimpulse aber völlig ausreichend. Sie sind sogar weit effizienter als der Einsatz von kosten- und wartungsintensiven Rührwerken, weil durch die Strömungsimpulse von den in Bodennähe befindlichen Belüfterelementen ganzflächig die Biomasse durch die senkrecht nach oben aufsteigenden Gasblasen in Schwebe gebracht werden. Somit werden auch sogenannte "Kurzschlußströmungen" vermieden.

Grundsätzlich ist es möglich, mit den Strömungsimpulsen ein sauerstofffreies Gas oder Gasgemisch einzutragen. Dann können die Strömungsimpulse zeitlich freigelegt oder auch länger dimensioniert werden, da eine Änderung des Sauerstoffaufnahmeverhaltens der Mikroorganismen aufgrund der Absenz von gelöstem Sauerstoff nicht möglich ist.

Es ist grundsätzlich auch denkbar, daß das zur Mobilisierung eingebrachte Gas oder Gasgemisch den Ablauf der biologischen Stoffwechselvorgänge während der Denitrifikationsphase unterstützt oder beschleunigt, was beispielsweise durch Methangas erzielt werden kann.

Es ist auch möglich, in verschiedenen Bereichen des Klärbeckens unterschiedlich lange oder unterschiedlich häufige oder intensive Strömungsimpulse einzutragen, um eine wirklich volleffiziente Denitrifikationsphase zu erzielen.

Bereits beim Stand der Abwassertechnik sind mit den Belüftungselementen Steuerungseinrichtungen gekoppelt, die die Belüftungseinrichtung zyklisch zur Erzeugung der Nitrifikations-/Denitrifikationsphasen anblasen. Grundsätzlich ist es möglich, über diese Steuerungseinrichtungen auch die zur Abwassermobilisation vorgesehenen Strömungsimpulse zu erzeugen.

Um zu erfassen, wie weit sich während der Denitrifikationsphase die Belebtschlammteilchen im Abwasser bereits in den Bodenbereich abgesetzt haben, können im Klärbecken insbesondere optische Sensorelemente vorgesehen werden, die beispielsweise in einem oberen Beckenbereich und im Bodenbereich eine optische Dichtedifferenzmessung durchführen.

Stellt sich dabei heraus, daß die Dichte der Belebtschlammteilchen im unteren Bereich bereits deutlich höher ist als im oberen Bereich, schaltet die Steuerungseinrichtung einen Strömungsimpuls, um das Abwasser im Sinne der Erfindung wieder zu mobilisieren.

Die Dauer des Strömungsimpluses kann dabei vorteilhafterweise etwa im Bereich vom 10 - 60 s liegen. Diese Angaben sind aber lediglich Richtwerte und können unter- oder überschritten werden, je nach dem, welches Gas oder Gasgemisch mit den Strömungsimpulsen in die Denitrifikationsphase eingebracht wird.

Grundsätzlich können auch mehrere kurze Strömungsimpulse hintereinander erzeugt werden. Wichtig ist dabei, daß der zeitliche Abstand der Strömungsimpulsen, wenn dabei Sauerstoff eingetragen wird, so groß gewählt ist, daß die Denitrifikationsphase durch zu hohen Sauerstoffeintrag nicht unterbrochen wird.

Vorteilhafterweise kommen als Belüftungselemente für das Verfahren sogenannte "Flächenbelüfter" in Frage, die am Boden oder knapp über dem Bodenbereich eines Klärbeckens montiert werden.

Die Erfindung ist anhand eines schematischen Ausführungsbeispiels näher erläutert. Dieses zeigt die verschiedenen Phasen Belüftung, Belebtschlammdurchmischung. Nitrifikation und Denitrifikation im zeitlichen Ablauf.

Während der Nitrifikationsphase wird NH₄ in NO₃ umgesetzt, dazu wird kontiunuierlich Druckluft durch die Belüftungselemente in das Abwasser eingeblasen. Beim Ausführungsbeispiel ist die Luftmenge während der Nitrifikationsphase konstant dargestellt. Es besteht aber auch die Möglichkeit, während der Nitrifikationsphase unterschiedliche Luftmengen zu verwenden.

Während der Denitrifikationsphasen sind die Belüfterelemente im wesentlichen abgeschaltet. Dabei wird NO₃ im Abwasser abgebaut. Der NH₄-Gehalt im Abwasser steigt durch den stetigen Zufluß wieder an.

Zur Mobilisierung des Abwassers während der Denitrifikationsphase sind im Ausführungsbeispiel zwei Strömungsimpulse dargestellt, die das Abwasser und damit den sich bereits teilweise abgesetzten Belebtschlamm aufwirbeln.

Grundsätzlich ist es bei Verwendung von sauerstofffreiem Gas auch möglich, die Impulse durch eine kontinuierliche Mobilisierungsströmung zu ersetzen, die durch die Belüftungselemente erzeugt wird.

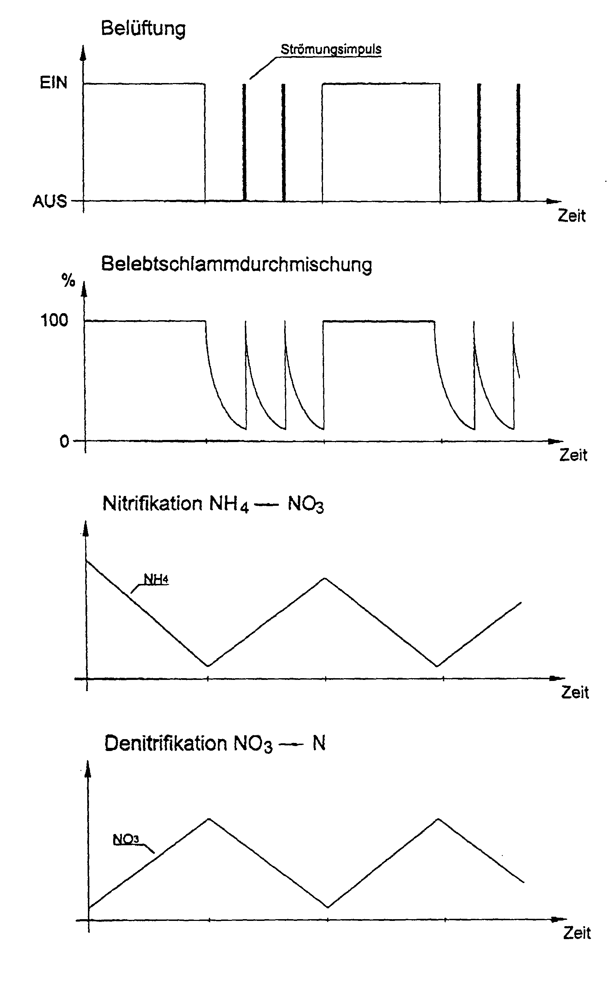

## Patentansprüche

1. Verfahren zur Behandlung von Abwasser in einem Klärbecken zum Zwecke der Abwasserreinigung, mit folgenden Verfahrensschritten:
a) Vorsehen mindestens eines Belüftungselements im Bodenbereich des Klärbeckens zum Einblasen von Luft in das Abwasser, um während einer zeitlich begrenzten Nitrifikationsphase Sauerstoff in den Klärprozeß einzutragen;
b) Vorsehen mindestens einer der/den Nitrifikationsphase(n) nachfolgenden Denitrifikationsphase, während der kein für den Klärprozeß relevanter Sauerstoffeintrag in das Abwasser erfolgt und das Abwasser zur Aufwirbelung von Belebtschlammteilchen mobilisiert wird,
**dadurch gekennzeichnet, daß**
c) die Abwassermobilisierung zur Aufwirbelung der Belebtschlammteilchen während der Denitrifikationsphase durch kurze, von den Belüftungselementen abgegebene Strömungsimpulse erzeugt wird.

2. Verfahren nach Anspruch 1,
**dadurch gekennzeichnet, daß**
die Strömungsimpulse Gasströmungsimpulse sind.

3. Verfahren nach Anspruch 2,
**dadurch gekennzeichnet, daß**
die Gasströmungsimpulse Luftströmungsimpulse sind.

4. Verfahren nach Anspruch 3,
**dadurch gekennzeichnet, daß**
die Gas- oder Luftströmungsimpulse zeitlich im Intervall der Denitrifikationsphase so gelegt und begrenzt sind, daß die im Abwasser befindlichen Mikroorganismen aus den Luftströmungsimpulsen keinen im Abwasser gelösten Sauerstoff aufnehmen können.

5. Verfahren nach einem der vorhergehenden Ansprüche 1- 3,
**dadurch gekennzeichnet, daß**
mit den Strömungsimpulsen ein sauerstofffreies Gas oder Gasgemisch eingetragen wird.

6. Verfahren nach einem der vorhergehenden Ansprüche 2 - 5,
**dadurch gekennzeichnet, daß**
das Gas oder Gasgemisch den Ablauf der biochemischen Vorgänge während der Denitrifikationsphase unterstützt oder beschleunigt.

7. Verfahren nach einem der Ansprüche 9 und/oder 10,
**dadurch gekennzeichnet, daß**
das Gas oder Gasgemisch eine externe Kohlenstoffquelle enthält.

8. Verfahren nach Anspruch 7,
**dadurch gekennzeichnet, daß**
das Gas oder Gasgemisch aus Klärgas oder Methan besteht.

9. Verfahren nach der vorhergehenden Ansprüche,
**dadurch gekennzeichnet, daß**
in unterschiedlichen Bereichen des Klärbeckens (Zentrum/Mittelbereich/Randbereich) unterschiedlich lange und/oder unterschiedlich häufige Strömungsimpulse eingetragen werden.

10. Verfahren nach einem der vorhergehenden Ansprüche,
**gekennzeichnet durch**
Vorsehen einer mit den Belüftungselementen gekoppelten Steuerungseinrichtung, durch welche neben den den Sauerstoffeintrag verursachenden Anblasphasen der Belüftungselemente die zur Abwassermobilisierung vorgesehenen Strömungsimpulse erzeugt werden.

11. Verfahren nach einem der vorhergehenden Ansprüche,
**dadurch gekennzeichnet, daß**
im Klärbecken Sensorelemente angeordnet sind, über die die Belebtschlammdichte im Bereich des Abwassers erfaßt wird.

12. Verfahren nach Anspruch 11,
**dadurch gekennzeichnet, daß**
die Sensorelemente optische Elemente sind.

13. Verfahren nach einem der Ansprüche 11 und 12,
**dadurch gekennzeichnet, daß**
die Sensorelemente mit der Steuerungseinrichtung verbunden sind.

14. Verfahren nach einem der vorhergehenden Ansprüche,
**dadurch gekennzeichnet, daß**
die Länge der Strömungsimpulse im Bereich von etwa 10 s - 60 s liegt.

15. Verfahren nach einem der vorhergehenden Ansprüche,
**dadurch gekennzeichnet, daß**
während einer Denitrifikationsphase mehrere Strömungsimpulse erzeugt werden.

16. Verfahren nach einem der vorhergehenden Ansprüche,
**dadurch gekennzeichnet, daß**
die Strömungsimpulse zeitliche Abstände voneinander haben, die größer als etwa 5 min sind.

17. Verfahren nach einem der vorhergehenden Ansprüche,
**dadurch gekennzeichnet, daß**
als Belüftungselement ein mit einer Membrane versehenen Flächenbelüfter (Platten- oder Streifenbelüfter) eingesetzt wird.
